Europäisches Patentamt

European Patent Office

Office européen des brevets

(11) Numéro de publication: **0 370 854**
**A2**

# (12) DEMANDE DE BREVET EUROPEEN

(21) Numéro de dépôt: 89403055.0

(51) Int. Cl.5: **B60R 22/34**

(22) Date de dépôt: 07.11.89

(30) Priorité: 22.11.88 FR 8815150

(43) Date de publication de la demande:
30.05.90 Bulletin 90/22

(84) Etats contractants désignés:
DE ES FR GB IT

(71) Demandeur: REGIE NATIONALE DES USINES
RENAULT
Boîte postale 103 8-10 avenue Emile Zola
F-92109 Boulogne-Billancourt(FR)

(72) Inventeur: Laporte, Alain
24, Boulevard Léon Louesse
F-92500 Rueil-Malmaison(FR)
Inventeur: Girard, Philippe
25, Rue des Champs Guillaume
F-95240 Cormeilles-en-Parisis(FR)

(74) Mandataire: Ernst-Schonberg, Michel et al
8/10, avenue Emile Zola
F-92109 Boulogne Billancourt(FR)

(54) Boîtier de protection pour mécanisme enrouleur de ceinture de sécurité.

(57) Boîtier de protection pour mécanisme enrouleur de ceinture de sécurité de véhicule automobile dans lequel un mandrin (20) est monté à rotation dans un support (21) qui porte extérieurement des moyens de sollicitation de la sangle de la ceinture de sécurité dans le sens de l'enroulement, et de verrouillage du mandrin en rotation, caractérisé par le fait que le boîtier s'étend verticalement le long des flancs latéraux opposés du mécanisme et possède un bord d'appui (34, 36) horizontal qui entoure une fente (37) de passage de la sangle, dont la surface est tournée vers la surface d'appui correspondante d'une tablette (5) de fermeture du compartiment à bagages du véhicule.

FIG.2

## BOITIER DE PROTECTION POUR MECANISME ENROULEUR DE CEINTURE DE SECURITE

L'invention concerne un boîtier de protection pour mécanisme enrouleur de ceinture de sécurité dans lequel un mandrin est monté à rotation dans un support, sur lequel est enroulée la sangle de la ceinture, ledit mandrin étant sollicité par un ressort dans le sens de l'enroulement de la sangle et par un dispositif de verrouillage qui en cas de choc bloque le mandrin en rotation pour empêcher le déroulement de la sangle.

La publication FR-A-2089369 décrit un tel enrouleur sur lequel le ressort et le dipositif de verrouillage sont situés dans des boîtiers rapportés sur des branches latérales du support.

Un tel enrouleur est généralement monté dans un logement entre deux parois interne et externe d'une carrosserie de véhicule automobile ou sur une paroi latérale interne de celle-ci. Dans ce dernier cas, il doit être localisé dans une zone spécifique de la carrosserie dans le but d'éviter la création d'aspérités susceptibles d'entrer accidentellement en contact avec le corps du personnel transporté.

La solution qui consiste à monter le mécanisme enrouleur sur une paroi du compartiment à bagages n'est pas satisfaisante en raison des contacts possibles de la sangle avec le contenu du compartiment, susceptibles de perturber l'enroulement et la tension de la sangle.

L'invention propose un nouvel agencement du mécanisme enrouleur sur la paroi latérale intérieure d'une carrosserie de véhicule automobile dans lequel le compartiment à bagages est séparé de l'habitacle par une paroi de séparation constitué par le dossier d'un siège arrière du véhicule.

Dans ce cas, il importe que l'enrouleur soit placé en dehors de l'habitacle et à une distance suffisamment faible de l'occupant du siège dans le but d'éviter une augmentation injustifiée de la longueur de la sangle de la ceinture de sécurité.

Selon l'invention, le boîtier s'étend verticalement le long des flancs latéraux opposés du mécanisme et possède un bord d'appui horizontal qui entoure une fente de passage de la sangle, dont la surface est tournée vers la surface d'appui correspondante d'une tablette de fermeture du compartiment à bagages.

Le boîtier ainsi réalisé permet la localisation du mécanisme enrouleur à proximité de la tablette et simplifie la réalisation des supports latéraux de celle-ci.

D'autres caractéristiques et avantages apparaîtront à la lecture de la description d'un mode de réalisation du support en référence au dessin annexé dans lequel :

- la figure 1 est une représentation partielle d'un habitacle de véhicule automobile dont on a enlevé une paroi latérale dans le but de localiser la tablette de fermeture du compartiment à bagages,

- la figure 2 est une vue en coupe transversale partielle de l'habitacle suivant la ligne II-II de la figure 1,

- la figure 3 est une vue en perspective du boîtier de protection conforme à l'invention.

En référence au dessin, la carrosserie 1 du véhicule comporte un habitacle 2 et un compartiment à bagages 3, séparés par une cloison formée par le dossier 4 de la rangée de sièges arrière.

Une tablette 5 qui peut être montée à articulation sur le dossier 4 ou sur des paliers rapportés sur une paroi latérale intérieure 7 comporte des bords latéraux 8 munis d'une découpe 9 dans laquelle débouche la fente de passage 10 de la sangle 11 d'une ceinture de sécurité conventionnelle 12 à mécanisme enrouleur 13.

Une ferrure de coulissement 14, fixée à la paroi 7, permet le déroulement de la sangle lors de la mise en service de la ceinture.

Le mécanisme enrouleur du type conventionnel est constitué, ainsi que cela est bien connu, par un mandrin 20 monté à rotation dans un support 21 qui porte extérieurement sur des flancs latéraux , un ressort de-rappel de la sangle 11 dans le sens de l'enroulement. Un mécanisme de verrouillage en rotation du mandrin 20 est placé extérieurement de l'autre côté du support et lesdits ressort et mécanisme de verrouillage sont protégés par des couvercles 25, 25'.

Par ailleurs, le support 21 se prolonge verticalement vers le bas par une plaque 26 qui reçoit la vis de fixation 27 du mécanisme 13 à la paroi 7 de la carrosserie.

Un mécanisme de ce type, décrit à titre d'exemple non limitatif dans la publication FR-A-2089369, est protégé conformément à l'invention par un boîtier 30.

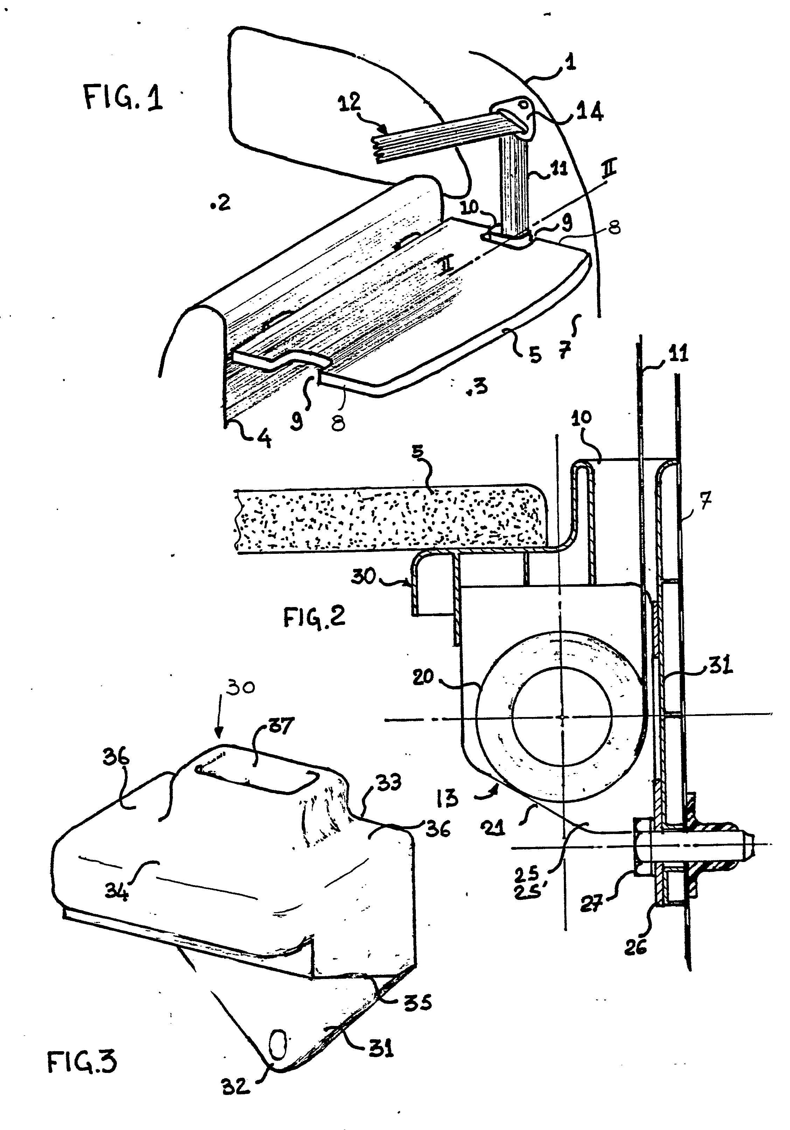

Le boîtier 30, représenté plus en détail sur les figures 2 et 3, possède une paroi de fond 31 verticale de forme générale trapézoïdale dont la petite base 32 est voisine du trou de passage de la vis de fixation 27.

La grande base 33 s'étend horizontalement vers l'avant par un bord d'appui horizontal 34 et latéralement par des flancs verticaux 35 de protection qui couvrent partiellement les couvercles 25, 25' du ressort et du mécanisme et qui prolongent également vers le bas des bords d'appui horizontaux 36.

L'ensemble des appuis 34, 36 entourent la fente 37 de passage de la sangle 11 et constituent de la sorte une surface d'appui tournée vers la surface d'appui correspondante de la tablette 5.

Le boîtier ainsi réalisé peut être fixé simultanément avec le mécanisme enrouleur dans la position requise au bon fonctionnement de celui-ci à l'aide de moyens additionnels de positionnement sans sortir pour autant du cadre de l'invention.

## Revendications

1. Boîtier de protection pour mécanisme enrouleur de ceinture de sécurité de véhicule automobile dans lequel un mandrin (20) est monté à rotation dans un support (21) qui porte extérieurement des moyens de sollicitation de la sangle de la ceinture de sécurité dans le sens de l'enroulement, et de verrouillage du mandrin en rotation, caractérisé par le fait que le boîtier s'étend verticalement le long des flancs latéraux opposés du mécanisme et possède un bord d'appui (34, 36) horizontal qui entoure une fente (37) de passage de la sangle, dont la surface est tournée vers la surface d'appui correspondante d'une tablette (5) de fermeture du compartiment à bagages du véhicule.

2. Boîtier selon la revendication 1, caractérisé par le fait que le boîtier se prolonge verticalement vers le bas par une paroi de fixation perpendiculaire au bord d'appui de la tablette (5) traversée par la vis de fixation du support (21) du mécanisme enrouleur sur une paroi de la carrosserie.

FIG.1

FIG.2

FIG.3